# EUROPEAN PATENT SPECIFICATION

(11) **EP 4 388 562 B1**
(45) Date of publication and mention of the grant of the patent: **18.06.2025**
(21) Application number: 23732159.1
(22) Date of filing: 23.06.2023
(51) Int. Cl.: H01B 3/56, H01H 33/22, H02B 13/035, H02B 13/055, H01H 33/56

(54) **ELECTRIC APPARATUS FOR THE GENERATION, THE TRANSMISSION AND/OR THE DISTRIBUTION OF ELECTRICAL ENERGY**
ELEKTRISCHES GERÄT ZUR ERZEUGUNG, ÜBERTRAGUNG UND/ODER VERTEILUNG ELEKTRISCHER ENERGIE
APPAREIL ÉLECTRIQUE DE GÉNÉRATION, DE TRANSMISSION ET/OU DE DISTRIBUTION D'ÉNERGIE ÉLECTRIQUE

(30) Priority: 09.08.2022 EP 22189374
(43) Date of publication of application: 26.06.2024
(73) Proprietor: Hitachi Energy Ltd, 8050 Zürich (CH)
(72) Inventor: BUFFONI, Saskia, 5103 Möriken (CH); DONZEL, Lise, 5430 Wettingen (CH); KRAWCZYK, Pawel Adam, 5400 Baden (CH); BOEHM, Moritz, 5507 Mellingen (CH); GATZSCHE, Michael, 8003 Zürich (CH)
(74) Representative: Schaad, Balass, Menzl & Partner AG
(86) International application number: PCT/EP2023/067101
(87) International publication number: WO 2024/032959

(56) References cited:
- EP-A1- 3 671 764
- WO-A1-2020/254004
- US-A1- 2018 005 727

## Description

The present invention relates to an electrical apparatus for the generation, the transmission and/or the distribution of electrical energy, according to the preamble of claim 1, as well as to the use of a specific adsorber in an electrical apparatus for the generation, the transmission and/or the distribution of electrical energy.

In electrical apparatuses, dielectric insulation media in gaseous or liquid state are conventionally applied for the insulation of an electrical component.

In metal-encapsulated switchgears, for example, the active parts are arranged in a gas-tight housing, which defines an insulating space comprising an insulation gas. For interrupting the current in *e.g*. high voltage switchgears, the insulating gas further functions as an arc-extinction gas.

Sulphur hexafluoride (SF₆) is a well-established insulation gas due to its outstanding dielectric properties and its chemical inertness. Despite these properties, efforts to look for an alternative insulation gas have nevertheless been intensified, in particular in view of a substitute having a lower Global Warming Potential (GWP) than the one of SF₆.

In view of providing a non-SF₆ substitute, the use of organofluorine compounds in dielectric insulation media has been suggested.

WO-A-2010/142346 suggests a dielectric insulation medium comprising a fluoroketone containing from 4 to 12 carbon atoms.

Fluoroketones have been shown to have a high dielectric strength. At the same time, they have a very low Global Warming Potential (GWP) and very low toxicity. Owed to the combination of these characteristics, fluoroketones constitute a viable alternative to SF₆.

Further developments in this regard are reflected in WO-A-2012/080246 suggesting a dielectric insulation gas comprising a fluoroketone containing exactly 5 carbon atoms, in particular 1,1,1,3,4,4,4-heptafluoro-3-(trifluoromethyl)-butan-2-one (hereinafter also referred to as C5-FK), in a mixture with a carrier gas, in particular air or an air component, which together with the fluoroketone provides a non-linear increase of the dielectric strength of the insulation medium over the sum of dielectric strengths of the gas components of the insulation medium.

Further attempts in finding an alternative "non-SF₆" insulation medium are reflected in WO 2013/151741 suggesting the use of heptafluoroisobutyronitrile, (CF₃)₂CFCN (hereinafter also referred to as "C4-FN"), or 2,3,3,3-tetrafluoro-2-(trifluoromethoxy)propanenitrile (CF₃CF(OCF₃)CN, as a dielectric fluid.

Based thereon, WO 2015/040069 describes an electrical apparatus of medium or high voltage comprising a housing, in which a gaseous medium comprising heptafluoroisobutyronitrile, carbon dioxide and oxygen is contained.

All of the organofluorine compounds mentioned above have in common that they are less inert than SF₆. Although a reduced inertness is wanted in view of the organofluorine compound's reduced GWP, reaction with other compounds contained in the electric apparatus is unwanted, since this has at the one hand a negative impact on the performance of the dielectric insulation medium (mainly due to the decrease in the concentration of the organofluorine compound). On the other hand, the decomposition products or by-products formed can compromise the function of the apparatus and/or give raise to health and safety risks.

This is in particular the case for hydrofluoric acid, which is highly toxic and which can be formed as a by-product from reaction of a fluoroketone with water. Also with regard to fluoronitriles, moisture (or humidity) in the insulation space has been found to a be key driver for decomposition and thus for the generation of potentially harmful by-products.

It is therefore imperative that moisture contained in the insulation space is at least partially removed and that moisture is thus not available or only available in very limited amounts as a reaction partner of the organofluorine compound.

For removing moisture from the insulation space of an electric apparatus, several desiccants have been proposed. EP2904617A, for example, mentions the use of a desiccant selected from the group consisting of: calcium, calcium sulphate, in particular drierite, calcium carbonate, calcium hydride, calcium chloride, potassium carbonate, potassium hydroxide, copper(II) sulphate, calcium oxide, magnesium, magnesium oxide, magnesium sulphate, magnesium perchlorate, sodium, sodium sulphate, lithium aluminium hydride, montmorrilonite, phosphorpentoxide, silica gel and a cellulose filter.

WO 2020/254004 A1 discloses a dielectric- insulation or arc-extinction fluid containing a dielectric compound, which - in having similar dielectric properties compared to octafluorobutene - has a higher stability when subjected to partial discharge in the presence of oxygen. The fluid disclosed is a mixture comprising a fluoroolefin and oxygen, wherein the fluoroolefin is a monohydrofluoroolefin containing from 4 to 5 carbon atoms, the hydrogen atom being bound to a carbon atom of the double bond or directly adjacent to the double bond. An electrical insulation apparatus is also disclosed, wherein the dielectric-insulation or arc-extinction fluid can be used with a conventional adsorber, primarily designed to remove water and impurities from the insulation space, without facing the problem of the monohydrofluoroolefin being adsorbed by the adsorber. The adsorber can be a zeolite having a pore size from 3 to 5 A used for desiccation of the insulation space, as there is no or only negligible adsorption of the monohydrofluoroolefin containing from 4 to 5 carbon atoms.

EP 3 671 764 A1 discloses an electrical insulation system for medium or high voltage electrical switchgear comprising a gaseous medium consisting of a mixture of one or more fluoroketones of between 5 and 6 carbon atoms, one or more non-flammable hydrofluoroolefins of 4 carbon atoms and one, two or three carrier gases selected from N2, O2, dry air, helium or mixtures thereof; and a molecular sieve having a pore size of 3 to 6 Å and a polar surface. The molecular sieve can be a zeolite sieve. The zeolite may be natural or synthetic zeolite.

US 2018/005727 A1 discloses an electrical apparatus for the generation, transmission, distribution and/or usage of electrical energy comprising a housing enclosing an insulating space and an electrical component arranged in the insulating space. The insulating space contains a dielectric insulation gas comprising an organofluorine compound. The apparatus further comprises a desiccant arranged such as to come into contact with the insulation gas. The desiccant contains lithium bromide that does neither adsorb organofluorine compound molecules nor carrier gas molecules and thus leaves the composition of the insulation gas unaffected. In addition to the desiccant containing lithium bromide, the apparatus can further comprise at least one molecular sieve in the form of a zeolite arranged such as to come into contact with the insulation gas.

In addition, zeolites are currently being used as adsorber in some industrial applications, including SF₆-using high voltage switchgear, and a large variety of zeolites are commercially available, some of which are based on natural occurring minerals (moederite, stilbite, or the like) and some synthetized (type A, X, Y and L crystal types). For handling reasons, the zeolites are often used in the form of beads or pellets and can comprise some binding agent, typically clay, for providing mechanical stability.

Although the use of zeolites allows favourable properties in terms of adsorption to be achieved, investigations revealed that the problem of decomposition products being formed is not completely solved.

In the case of an apparatus using perfluoroisobutyronitrile (C4-FN), it has for example been found that various decomposition products can form, some of which form crystalline deposits in the interior of the apparatus. In this regard, reference is made to Juhre et al., Cigre Report ID 1114, ("Investigations on the long-term performance of Fluoronitrile-containing gas mixtures in gas-insulated systems"), reporting on tests, in which a zeolite type with a pore size of 3 Å was used but which nevertheless resulted in the formation of solid decomposition products. In addition, the formation of decomposition products when exposing C4-FN to a moisture containing environment is also reported in Kessler et al., "Compatibility of a Gaseous Dielectric with Al, Ag, and Cu and Gas-Phase Synthesis of a New N-Acylamidine Copper Complex", Eur. J. Inorg. Chem. 2020, 1989-1994.

According to these investigations, the main components of the decomposition products of C4-FN are perfluorobutyroamide (2,3,3,3-tetra-fluoro-2-(trifluoromethyl)propane amide) (decomposition product A): 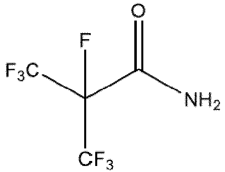 (decomposition product A) as well as the N-acyl amidine dimer of this compound (decomposition product B): 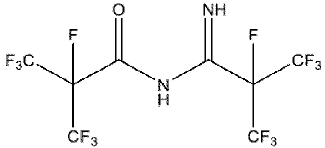 (decomposition product B) and N-acyl amidine metal complexes (decomposition product C): 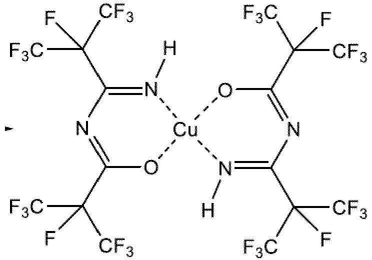 (decomposition product C).

In consideration of the increasing need to reduce the use of SF₆ to a minimum, it would be desirable to provide a "non-SF₆ electric apparatus" for the generation, the transmission and/or the distribution of electrical energy, i.e. an apparatus which uses an alternative gas other than SF₆ and hence complies with the requirement of improved environmental friendliness, in particular a reduced carbon footprint, but which does not have the drawbacks mentioned above. In particular, there is a need to efficiently remove at least moisture from the insulation space of such an electrical apparatus, but without compromising the performance and the safety of the electrical apparatus.

The problem to be solved by the present invention is thus to provide a non-SF₆ electrical apparatus for the generation, the transmission and/or the distribution of electrical energy, in particular a non-SF₆ apparatus, more particularly a gas insulated switchgear (GIS), the GIS being a GIS for transmission, a GIS for sub-transmission, or an integrated GIS; a gas-insulated line; a hybrid switchgear (gas insulated modules); a circuit breaker being a live tank breaker, a dead tank breaker, or an interrupter unit; a switch being a grounding or earthing switch, an isolation switch or disconnector, or a fast acting earth switch; a transformer being an instrument or measurement transformer, a power transformer or a distribution transformer; a gas-insulated surge arrester; or extensions, upgrades or retrofits or a component or combinations thereof, which allows removing moisture or other unwanted impurities (i.e. contaminants and/or decomposition products resulting due to arcing or partial discharge) efficiently from the insulation space but with a low tendency of unwanted decomposition products e.g. A (Amide), B (Dimer), C (Complex) being formed.

The problem is solved by the apparatus according to claim 1. Preferred embodiments of the invention are defined in the dependent claims.

According to claim 1, the invention relates to an electrical apparatus for the generation, the transmission and/or the distribution of electrical energy.

The electrical apparatus may be energized with a voltage higher than 1 kV, and more preferably energized at medium or high voltage. In this regard, it can be preferred that the electrical apparatus is energized with a voltage higher than 12 kV or with a voltage higher than 52 kV.

As further defined in claim 1, the electrical apparatus comprises a housing enclosing an electrical apparatus interior space, at least a portion of the electrical apparatus interior space forming an insulation space, in which an electrical component is arranged and which contains an insulation medium surrounding the electrical component.

The insulation medium contains an organofluorine compound, in particular C4-FN or C5-FK, which has a reduced GWP and a smaller carbon footprint compared to SF₆, as discussed above.

The electrical apparatus further comprises an adsorber, specifically an adsorber for removing at least a part of a contaminant and/or decomposition product resulting from arcing or partial discharge in the insulation space. For example, the adsorber can be used for removing moisture or other unwanted impurities or gaseous decomposition products (resulting from arcing or partial discharge) contained in the insulation space. It should be noted that a contaminant such as moisture may get introduced in the insulation space due to a reaction in the insulation space, or during gas filling or service (e.g. during gas handling).

According to the invention, the adsorber comprises a zeolite, in particular a zeolite containing
- less than 0.5 at% of magnesium (Mg)
- less than 0.5 at% of calcium (Ca) and
- less than 0.5 at% of iron (Fe).

As will be discussed by way of the specific working examples, it has surprisingly been found by the present inventors that an adsorber preferably comprising a zeolite as defined above does not lead to any of the solid decomposition products A, B or C being formed in the insulation space, even if harsh conditions are applied. The present invention therefore allows moisture or other unwanted impurities or gaseous by-products (resulting from arcing or partial discharge) to be efficiently removed and at the same time the formation of potentially harmful decomposition products to be reduced or completely avoided.

In particular, it was found that issues regarding incompatibility with the organofluorine compound used in the dielectric insulation medium could be reduced or even completely avoided. Without wanting to be bound by the theory, it is assumed that the adsorber according to the present invention does not function as a catalyst for decomposition reactions as it may be the case for adsorbers not falling under the definition of the invention, thus leading to the formation of solid decomposition products.

The technical effect achieved by the present invention is particularly pronounced in case the electrical apparatus is a gas-insulated switchgear or a component thereof, due to the fact that the drawbacks mentioned above are particularly profound in a gas-insulated switchgear. However, all other electric apparatuses for the generation, the transmission and/or the distribution of electrical energy are covered by the present invention, in particular live tank breakers, dead tank breakers, gas insulated bus ducts, arresters, bushings and/or transformers.

According to a preferred embodiment of the present invention, the electrical apparatus is thus a gas insulated switchgear (GIS), the GIS being a GIS for transmission, a GIS for sub-transmission, or an integrated GIS; a gas-insulated line; a hybrid switchgear (gas insulated modules); a circuit breaker being a live tank breaker, a dead tank breaker, or an interrupter unit; a switch being a grounding or earthing switch, an isolation switch or disconnector, or a fast acting earth switch; a transformer, being an instrument or measurement transformer, a power transformer or a distribution transformer; a gas-insulated surge arrester; and extensions, upgrades and retrofits or a component or combinations thereof.

According to a preferred embodiment of the invention, the adsorber, and preferably the zeolite, contains less than 0.25 at% of Mg, more preferably less than 0.10 at% of Mg and most preferably is at least approximately devoid of Mg. For this preferred embodiment, there is an even lower tendency for the decomposition products mentioned being formed.

Additionally or alternatively, it is further preferred that the adsorber, and preferably the zeolite, contains less than 0.25 at% of Ca, more preferably less than 0.10 at% of Ca and most preferably is at least approximately devoid of Ca, for the same reason that the tendency of decomposition product formation is reduced even further.

Additionally or alternatively, it is further preferred that the adsorber, and preferably the zeolite, contains less than 0.25 at% of Fe, preferably less than 0.15 at% of Fe and most preferably is at least approximately devoid of Fe, for the reason mentioned above in the context of Mg and Ca.

In particular, the organofluorine compound used in the context of the present invention is a fluoroketone, in particular a perfluoroketone, and/or a fluoronitrile, in particular a perfluoronitrile.

According to a particularly preferred embodiment, the organofluorine compound is a fluoronitrile, and in particular a perfluoronitrile. More particularly, the fluoronitrile can be a perfluoroalkylnitrile, specifically perfluoroacetonitrile, perfluoropropionitrile (C₂F₅CN) and/or perfluorobutyronitrile (C₃F₇CN). Preferably, the fluoronitrile is perfluoroisobutyronitrile (according to the formula (CF₃)₂CFCN) and/or perfluoro-2-methoxypropanenitrile (according to the formula CF₃CF (OCF₃) CN). Of these, perfluoroisobutyronitrile (C4-FN) is particularly preferred.

Typically, the dielectric insulation medium additionally contains a carrier gas (or background gas) selected from the group of air, an air component, in particular nitrogen and/or oxygen, carbon dioxide and mixtures thereof.

The carrier gas used can essentially consist of only one component, for example carbon dioxide or nitrogen. Alternatively, the carrier gas can contain at least one further carrier gas component besides carbon dioxide or nitrogen (being the first component), in particular in an amount lower than the one of the first component. Specifically, the at least one further carrier gas component can be an oxidizing gas, in particular oxygen, for reducing the formation of soot and/or other unwanted decomposition products. More specifically, the insulation medium of the present invention relates to a ternary mixture containing C4-FN, carbon dioxide and oxygen or a ternary mixture containing C4-FN, nitrogen and oxygen.

Alternatively or additionally to the fluoronitrile contained in the specific insulation medium defined above, the alternative insulation medium can contain a fluoroketone, more particularly a perfluoroketone.

As mentioned above, the adsorber used is preferably comprising the zeolite in the form of beads or pellets. Typically, it is arranged in a sachet or casing which allows the insulation gas to permeate at least partially.

According to a further preferred embodiment of the invention, the zeolite has a pH less than 8, since this has been found to further contribute to a reduced tendency of decomposition products being formed. In the context of the present invention, the pH of the zeolite refers to the pH of the solution obtained by dissolving 5 g of the zeolite in 50 ml of distilled water.

It has surprisingly been found that also the amount of clay used as a binder in the zeolite-containing adsorber and to provide the latter with the required stability has an impact on the compatibility with the organofluorine compound. In this regard, an amount of clay of less than 3 wt-%, based on the total weight of the zeolite, has been found to be particularly preferred. Most preferably, the zeolite-containing adsorber is at least approximately devoid of clay.

In a preferred embodiment, the adsorber is primarily a moisture-adsorber for removing at least a part of the moisture (or humidity) contained in the insulation space.

In view of an even further reduction of the tendency to form unwanted decomposition products, it is further preferred that the average pore size diameter of the zeolite- is in the range from 0.25 to 0.55 nm.

Besides the electrical apparatus discussed above, a further aspect of the present invention relates to the use of an adsorber for removing at least a part of a contaminant and/or decomposition product resulting from arcing or partial discharge, the adsorber containing
- less than 0.5 at% of magnesium (Mg)
- less than 0.5 at% of calcium (Ca) and
- less than 0.5 at% of iron (Fe)
in an electrical apparatus for the generation, the transmission, the distribution and/or the usage of electrical energy, in particular an electrical apparatus of medium or high voltage. More particularly, the electrical apparatus is
a gas insulated switchgear (GIS) being a GIS for transmission or sub-transmission, or an integrated GIS;
a gas-insulated line;
a hybrid switchgear (gas insulated modules);
a circuit breaker being a live tank breaker, a dead tank breaker, or an interrupter unit;
a switch being a grounding or earthing switch, an isolation switch or disconnector, or a fast acting earth switch;
a transformer being an instrument or measurement transformer, a power transformer or a distribution transformer;
a gas-insulated surge arrester;
or extensions, upgrades or retrofits or a component or combinations thereof.

Preferably, the adsorber comprises a zeolite, more preferably a zeolite containing
- less than 0.5 at% of magnesium (Mg)
- less than 0.5 at% of calcium (Ca) and
- less than 0.5 at% of iron (Fe).

### EXAMPLES

The invention is further illustrated by way of the following examples and the attached figures, of which
- Fig. 1: shows a photographic picture of beads of an adsorber falling within the definition of the present invention after exposure to a dielectric insulation medium containing C4-FN and air in a test vessel at 70°C ;
- Fig. 2: shows a photographic picture of beads of an adsorber falling outside the definition of the present invention after exposure to a dielectric insulation medium containing C4-FN and air in a test vessel at 70°C ;

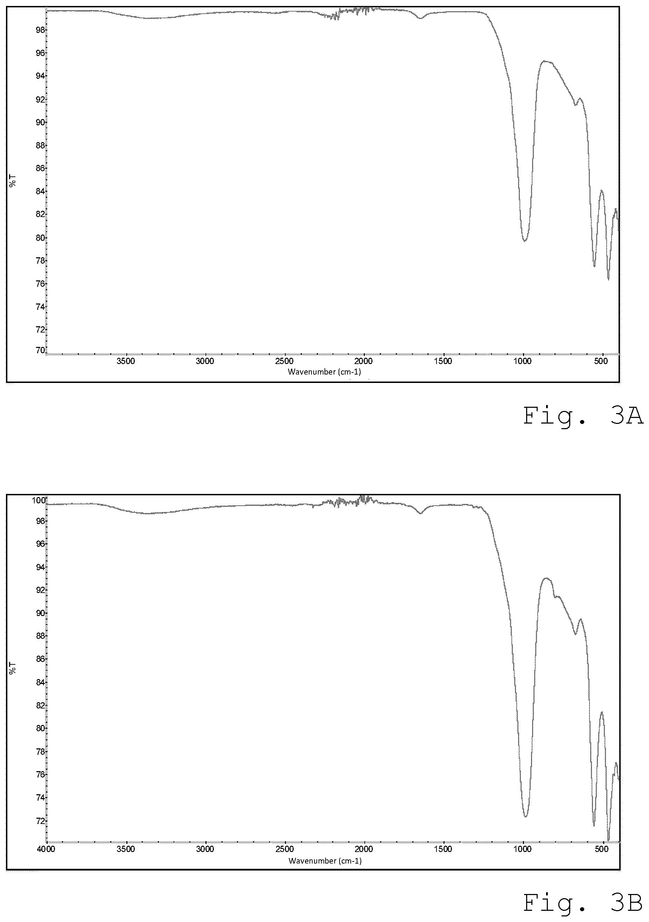

- Fig. 3: shows the FTIR spectrum of the adsorber shown in Fig. 1 (*i.e.* according to the present invention) prior to exposure (A) and after exposure (B); and

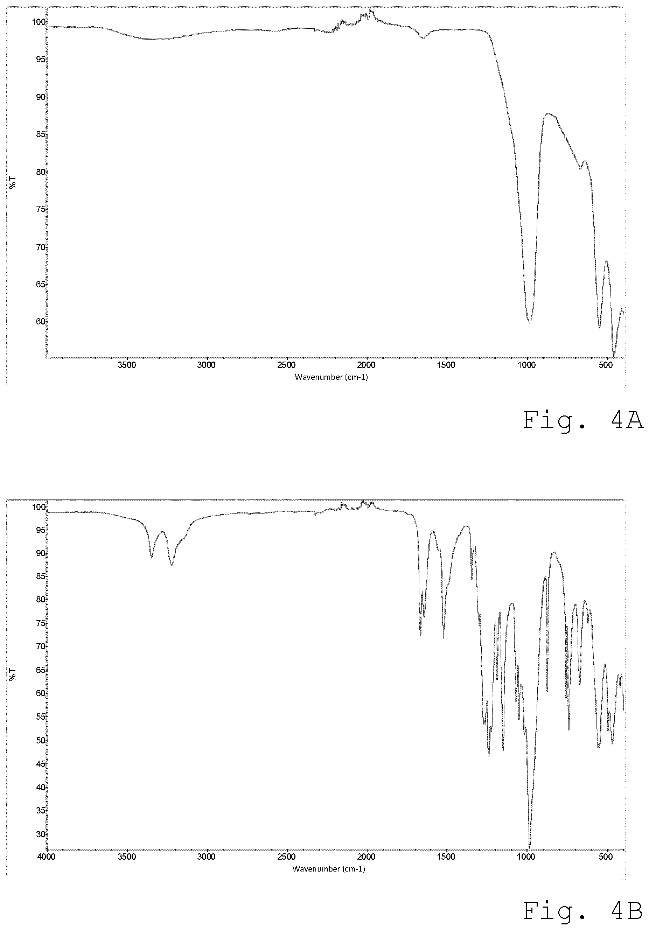

- Fig. 4: shows the FTIR spectrum of the adsorber shown in Fig. 2 (*i.e.* according to the comparative example) prior to exposure (A) and after exposure (B).

In a first series of tests, a bead-shaped adsorber comprising a zeolite of type A, 4A was exposed to a dielectric insulation medium containing C4-FN and air in a test vessel at 70°C and was examined after exposure.

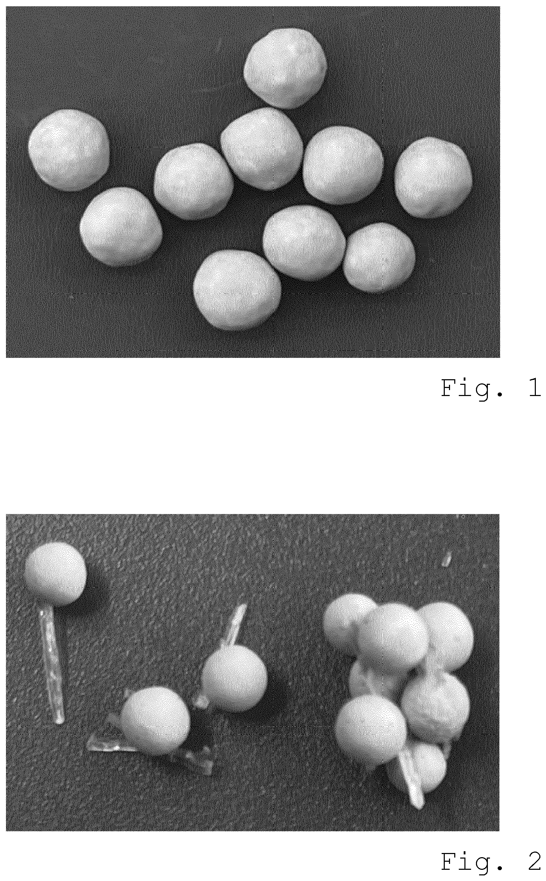

The composition of the zeolite of this adsorber (Sample 1) as determined by EDX analysis was as follows, thus complying with the definition of the present invention:
Referring to Fig. 1 and 2, it was observed that for comparative Sample 2 crystals were formed (Fig. 2) whereas no such crystals were detected for Sample 1 (Fig. 1). The FTIR spectra confirmed the formation of the N-acyl amidine dimer (decomposition product B), whereas no decomposition products were identified for Sample 1 (with the spectrum in the respective range after exposure essentially corresponds to the one prior to exposure) .

Composition of Sample 1 in at%

| | |
|---|---|
| O | 60.15 |
| Na | 10.20 |
| Al | 14.70 |
| Si | 14.68 |
| Mg | <LOD |
| Ca | <LOD |
| Fe | 0.10 |
| K | <LOD |
| S | 0.05 |
| Ti | 0.12 |

| | |
|---|---|
| * (with <LOD standing for a concentration below the lower detection limit) | |

| | |
|---|---|
| pH | 7-8 (5g of zeolite in 50mL of distilled water) |

For reasons of comparison, a zeolite of type A, 4A (Sample 2) was used under the exact same conditions as described for Sample 1, Sample 2 having the following composition:
Composition of Sample 2 in at%

| | |
|---|---|
| O | 61.93 |
| Na | 9.58 |
| Al | 11.42 |
| Si | 13.85 |
| Mg | 0.90 |
| Ca | 0.40 |
| Fe | 0.37 |
| K | 1.45 |
| S | 0.10 |
| Ti | <LOD |
| pH | 9-10 (5g of zeolite in 50mL of distilled water) |

The finding was confirmed by measurements made in a further test series examining the zeolite mentioned below after exposure to the conditions defined above for Sample 1 and Sample 2. Of these, the zeolites according to Sample 3 and 6 (having a composition falling within the definition of the present invention) did not show any crystal formation after the test at 70 °C in the insultation medium (containing C4-FN and air), whereas crystals were formed for Sample 4 and 5 (having a composition falling outside the definition of the present invention) if exposed to the same insulation gas and conditions:

| Sample No | **3** | | **6** | | **4** | | **5** | |
|---|---|---|---|---|---|---|---|---|
| Zeolite type | **A, 4A** | | **A** | | **A, 3A** | | **FAU** | |
| | | **at%** | | **at%** | | **at%** | | **at%** |
| | O | 62.30 | O | 62.15 | O | 63.45 | O | 62.65 |
| | Na | 11.00 | Na | 6.63 | Na | 6.59 | Na | 10.72 |
| | Al | 13.28 | Al | 14.13 | Al | 11.17 | Al | 11.00 |
| | Si | 13.10 | Si | 13.30 | Si | 13.36 | Si | 14.25 |
| | **Mg** | **<LOD** | **Mg** | **<LOD** | **Mg** | **1.06** | **Mg** | **0.71** |
| | **Ca** | **<LOD** | **Ca** | **<LOD** | **Ca** | **0.31** | **Ca** | **0.30** |
| | **Fe** | **<LOD** | **Fe** | **0.07** | **Fe** | **0.29** | **Fe** | **0.17** |
| | K | 0.22 | K | 3.72 | K | 3.61 | K | 0.12 |
| | S | 0.09 | S | <LOD | S | 0.16 | S | <LOD |
| | Ti | 0.01 | Ti | <LOD | Ti | <LOD | Ti | <LOD |
| pH (5g of zeolite in 50mL of distilled water) | 7-8 | | 7-8 | | 9-10 | | 9-10 | |
| after test at 70 °C in C4-FN/air mixture | no crystals | | no crystals | | crystals | | crystals | |

## Claims

1. An electrical apparatus for the generation, the transmission and/or the distribution of electrical energy comprising a housing enclosing an electrical apparatus interior space, at least a portion of the electrical apparatus interior space forming an insulation space, in which an electrical component is arranged and which contains an insulation medium surrounding the electrical component, the insulation medium containing an organofluorine compound and the electrical apparatus further comprising an adsorber comprising a zeolite for removing at least a part a contaminant and / or decomposition product resulting from arcing and/or partial discharge in the insulation space, **characterized in that** the zeolite contains
- less than 0.5 at% of magnesium (Mg)
- less than 0.5 at% of calcium (Ca) and
- less than 0.5 at% of iron (Fe).

2. Electrical apparatus according to claim 1, the electric apparatus being:
a gas insulated switchgear (GIS) being a GIS for transmission or sub-transmission, or an integrated GIS;
a gas-insulated line;
a hybrid switchgear (gas insulated modules);
a circuit breaker being a live tank breaker, a dead tank breaker, or an interrupter unit;
a switch being a grounding or earthing switch, an isolation switch or disconnector, or a fast acting earth switch;
a transformer being an instrument or measurement transformer, a power transformer or a distribution transformer;
a gas-insulated surge arrester; or
extensions, upgrades or retrofits or a component or combinations thereof.

3. Electrical apparatus according to any of the preceding claims, wherein the adsorber, and preferably the zeolite, contains less than 0.25 at% of Mg, preferably less than 0.10 at% of Mg and most preferably is at least approximately devoid of Mg.

4. Electrical apparatus according to any of the preceding claims, wherein the adsorber, and preferably the zeolite, contains less than 0.25 at% of Ca, preferably less than 0.10 at% of Ca and most preferably is at least approximately devoid of Ca.

5. Electrical apparatus according to any of the preceding claims, wherein the adsorber, and preferably the zeolite, contains less than 0.25 at% of Fe, preferably less than 0.15 at% of Fe and most preferably is at least approximately devoid of Fe.

6. Electrical apparatus according to any of the preceding claims, wherein the organofluorine compound is perfluoroisobutyronitrile.

7. Electrical apparatus according to any of claims 1 to 6, wherein the zeolite has a pH less than 8.

8. Electrical apparatus according to any of claims 1 to 7, wherein the amount of clay contained in the zeolite is less than 3 wt-%, based on the total weight of the zeolite, and preferably the zeolite is at least approximately devoid of clay.

9. Electrical apparatus according to any of claims 1 to 8, wherein the average pore size diameter of the zeolite is in the range from 0.25 to 0.55 nm.

10. Electrical apparatus according to any of the preceding claims, wherein the insulation medium further comprises a carrier gas selected from the group of air, an air component, in particular nitrogen and/or oxygen, carbon dioxide and mixtures thereof.

11. Electrical apparatus according to any of the preceding claims, wherein the electrical apparatus is energized with a voltage higher than 1 kV, and preferably is an electrical apparatus of medium or high voltage.

12. Use of an adsorber for removing at least a part of a contaminant and/or decomposition product resulting from arcing or partial discharge, the adsorber containing
- less than 0.5 at% of magnesium (Mg)
- less than 0.5 at% of calcium (Ca) and
- less than 0.5 at% of iron (Fe)
in an electrical apparatus for the generation, the transmission and/or the distribution of electrical energy.

13. Use of an adsorber according to claim 12, **characterized in that** the adsorber comprises a zeolite, in particular a zeolite containing
- less than 0.5 at% of magnesium (Mg)
- less than 0.5 at% of calcium (Ca) and
- less than 0.5 at% of iron (Fe).

14. Use of an adsorber according to claim 12 or 13, the electric apparatus being:
a gas insulated switchgear (GIS) being a GIS for transmission or sub-transmission, or an integrated GIS;
a gas-insulated line;
a hybrid switchgear (gas insulated modules);
a circuit breaker being a live tank breaker, a dead tank breaker, or an interrupter unit;
a switch being a grounding or earthing switch, an isolation switch or disconnector, or a fast acting earth switch;
a transformer being an instrument or measurement transformer, a power transformer or a distribution transformer;
a gas-insulated surge arrester; or
extensions, upgrades or retrofits or a component or combinations thereof.

## Patentansprüche

1. Elektrische Vorrichtung zur Erzeugung, Übertragung und/oder Verteilung elektrischer Energie, umfassend ein Gehäuse, das einen Innenraum der elektrischen Vorrichtung umschließt, wobei mindestens ein Teil des Innenraums der elektrischen Vorrichtung einen Isolationsraum bildet, in dem eine elektrische Komponente angeordnet ist und der ein Isolationsmedium enthält, das die elektrische Komponente umgibt, wobei das Isolationsmedium eine Organofluorverbindung enthält und die elektrische Vorrichtung ferner einen Adsorber umfasst, der einen Zeolith umfasst, um zumindest einen Teil eines Verunreinigungs- und/oder Zersetzungsprodukts zu entfernen, das durch Lichtbogenbildung und/oder Teilentladung in dem Isolationsraum entsteht, **dadurch gekennzeichnet, dass** der Zeolith Folgendes enthält:
- weniger als 0,5 Atom-% Magnesium (Mg)
- weniger als 0,5 Atom-% Calcium (Ca) und
- weniger als 0,5 Atom-% Eisen (Fe).

2. Elektrische Vorrichtung nach Anspruch 1, wobei es sich bei der elektrischen Vorrichtung um Folgendes handelt:
eine gasisolierte Schaltanlage (GIS), bei der es sich um eine GIS für Getriebe oder Teilgetriebe oder um eine integrierte GIS handelt;
eine gasisolierte Leitung;
eine Hybridschaltanlage (gasisolierte Module);
einen Leistungsschalter, bei dem es sich um einen Schaltkammerleistungsschalter, einen Kesselleistungsschalter oder eine Unterbrechereinheit handelt;
einen Schalter, bei dem es sich um einen Erdungs- oder Masseschalter, einen Isolierschalter oder Trennschalter oder einen schnell wirkenden Erdschalter handelt;
einen Transformator, bei dem es sich um einen Instrument- oder Messtransformator, einen Leistungstransformator oder einen Verteiltransformator handelt;
einen gasisolierten Überspannungsableiter; oder
Erweiterungen, Upgrades oder Nachrüstungen oder eine Komponente oder Kombinationen davon.

3. Elektrische Vorrichtung nach einem der vorhergehenden Ansprüche, wobei der Adsorber, und vorzugsweise der Zeolith, weniger als 0,25 Atom-% mg, vorzugsweise weniger als 0,10 Atom-% mg enthält und am meisten bevorzugt zumindest annähernd frei von Mg ist.

4. Elektrische Vorrichtung nach einem der vorhergehenden Ansprüche, wobei der Adsorber, und vorzugsweise der Zeolith, weniger als 0,25 Atom-% Ca, vorzugsweise weniger als 0,10 Atom-% Ca enthält und am meisten bevorzugt zumindest annähernd frei von Ca ist.

5. Elektrische Vorrichtung nach einem der vorhergehenden Ansprüche, wobei der Adsorber, und vorzugsweise der Zeolith, weniger als 0,25 Atom-% Fe, vorzugsweise weniger als 0,15 Atom-% Fe enthält und am meisten bevorzugt mindestens annähernd frei von Fe ist.

6. Elektrische Vorrichtung nach einem der vorhergehenden Ansprüche, wobei die Organofluorverbindung Perfluorisobutyronitril ist.

7. Elektrische Vorrichtung nach einem der Ansprüche 1 bis 6, wobei der Zeolith einen pH-Wert von weniger als 8 aufweist.

8. Elektrische Vorrichtung nach einem der Ansprüche 1 bis 7, wobei die Menge an Ton, die in dem Zeolith enthalten ist, weniger als 3 Gew.-% bezogen auf das Gesamtgewicht des Zeoliths beträgt und vorzugsweise der Zeolith mindestens annähernd frei von Ton ist.

9. Elektrische Vorrichtung nach einem der Ansprüche 1 bis 8, wobei der durchschnittliche Porengrößendurchmesser des Zeoliths in dem Bereich von 0,25 bis 0,55 nm liegt.

10. Elektrische Vorrichtung nach einem der vorhergehenden Ansprüche, wobei das Isolationsmedium ferner ein Trägergas umfasst, das aus der Gruppe von Luft, einer Luftkomponente, insbesondere Stickstoff und/oder Sauerstoff, Kohlendioxid und Mischungen davon ausgewählt ist.

11. Elektrische Vorrichtung nach einem der vorhergehenden Ansprüche, wobei die elektrische Vorrichtung mit einer Spannung von mehr als 1 kV versorgt wird und vorzugsweise eine elektrische Vorrichtung mit mittlerer oder hoher Spannung ist.

12. Verwendung eines Adsorbers zum Entfernen mindestens eines Teils eines Verunreinigungs- und/oder Zersetzungsprodukts, das durch Lichtbogenbildung oder Teilentladung entsteht, wobei der Adsorber Folgendes enthält:
- weniger als 0,5 Atom-% Magnesium (Mg)
- weniger als 0,5 Atom-% Calcium (Ca) und
- weniger als 0,5 Atom-% Eisen (Fe)
in einer elektrischen Vorrichtung zur Erzeugung, Übertragung und/oder Verteilung elektrischer Energie.

13. Verwendung eines Adsorbers nach Anspruch 12, **dadurch gekennzeichnet, dass** der Adsorber einen Zeolith umfasst, insbesondere einen Zeolith, der Folgendes enthält:
- weniger als 0,5 Atom-% Magnesium (Mg)
- weniger als 0,5 Atom-% Calcium (Ca) und
- weniger als 0,5 Atom-% Eisen (Fe).

14. Verwendung eines Adsorbers nach Anspruch 12 oder 13, wobei es sich bei der elektrischen Vorrichtung um Folgendes handelt:
eine gasisolierte Schaltanlage (GIS), bei der es sich um eine GIS für Getriebe oder Teilgetriebe oder um eine integrierte GIS handelt;
eine gasisolierte Leitung;
eine Hybridschaltanlage (gasisolierte Module);
einen Leistungsschalter, bei dem es sich um einen Schaltkammerleistungsschalter, einen Kesselleistungsschalter oder eine Unterbrechereinheit handelt;
einen Schalter, bei dem es sich um einen Erdungs- oder Masseschalter, einen Isolierschalter oder Trennschalter oder einen schnell wirkenden Erdschalter handelt;
einen Transformator, bei dem es sich um einen Instrument- oder Messtransformator, einen Leistungstransformator oder einen Verteiltransformator handelt;
einen gasisolierten Überspannungsableiter; oder
Erweiterungen, Upgrades oder Nachrüstungen oder eine Komponente oder Kombinationen davon.

## Revendications

1. Appareil électrique pour la production, la transmission et/ou la distribution d'énergie électrique comprenant un boîtier renfermant un espace intérieur d'appareil électrique, au moins une partie de l'espace intérieur d'appareil électrique formant un espace d'isolation, dans lequel un composant électrique est agencé et qui contient un milieu isolant entourant le composant électrique, le milieu isolant contenant un composé organofluoré et l'appareil électrique comprenant en outre un adsorbeur comprenant une zéolite pour éliminer au moins une partie d'un contaminant et/ou d'un produit de décomposition résultant de la formation d'un arc électrique et/ou d'une décharge partielle dans l'espace isolant, **caractérisé en ce que** la zéolite contient
- moins de 0,5 % at. de magnésium (Mg)
- moins de 0,5 % at. de calcium (Ca) et
- moins de 0,5 % at. de fer (Fe).

2. Appareil électrique selon la revendication 1, l'appareil électrique étant :
un appareillage de commutation à isolation par gaz (GIS) étant un GIS destiné à une transmission ou à une sous-transmission, ou un GIS intégré ;
une ligne isolée par gaz ;
un appareillage de commutation hybride (modules isolés par gaz) ;
un disjoncteur étant un disjoncteur à cuve sous tension, un disjoncteur à cuve hors tension, ou une unité d'interrupteur ;
un interrupteur étant un interrupteur de mise à la masse ou de mise à la terre, un commutateur d'isolement ou un sectionneur, ou un interrupteur de mise à la terre à action rapide ;
un transformateur étant un instrument ou un transformateur de mesure, un transformateur de puissance ou un transformateur de distribution ;
un parasurtenseur isolé par gaz ; ou
des extensions, mises à niveau ou modernisations ou un composant ou une combinaison de celles-ci.

3. Appareil électrique selon l'une quelconque des revendications précédentes, dans lequel l'adsorbeur, et de préférence la zéolite, contient moins de 0,25 % at. de Mg, de préférence moins de 0,10 % at. de Mg et le plus préférablement est au moins approximativement exempt de Mg.

4. Appareil électrique selon l'une quelconque des revendications précédentes, dans lequel l'adsorbeur, et de préférence la zéolite, contient moins de 0,25 % at. de Ca, de préférence moins de 0,10 % at. de Ca et le plus préférablement est au moins approximativement exempt de Ca.

5. Appareil électrique selon l'une quelconque des revendications précédentes, dans lequel l'adsorbeur, et de préférence la zéolite, contient moins de 0,25 % at. de Fe, de préférence moins de 0,15 % at. de Fe et le plus préférablement est au moins approximativement exempt de Fe.

6. Appareil électrique selon l'une quelconque des revendications précédentes, dans lequel le composé organofluoré est le perfluoro-isobutyronitrile.

7. Appareil électrique selon l'une quelconque des revendications 1 à 6, dans lequel la zéolite a un pH inférieur à 8.

8. Appareil électrique selon l'une quelconque des revendications 1 à 7, dans lequel la quantité d'argile contenue dans la zéolite est inférieure à 3 % en poids, par rapport au poids total de la zéolite, et de préférence la zéolite est au moins approximativement exempte d'argile.

9. Appareil électrique selon l'une quelconque des revendications 1 à 8, dans lequel le diamètre moyen des pores de la zéolite est dans la plage de 0,25 à 0,55 nm.

10. Appareil électrique selon l'une quelconque des revendications précédentes, dans lequel le milieu isolant comprend en outre un gaz porteur choisi dans le groupe consistant en air, un composant de l'air, en particulier l'azote et/ou l'oxygène, le dioxyde de carbone et des mélanges de ceux-ci.

11. Appareil électrique selon l'une quelconque des revendications précédentes, dans lequel l'appareil électrique est excité avec une tension supérieure à 1 kV, et est de préférence un appareil électrique à moyenne ou haute tension.

12. Utilisation d'un adsorbeur pour éliminer au moins une partie d'un contaminant et/ou d'un produit de décomposition résultant de la formation d'un arc électrique ou d'une décharge partielle, l'adsorbeur contenant
- moins de 0,5 % at. de magnésium (Mg)
- moins de 0,5 % at. de calcium (Ca) et
- moins de 0,5 % at. de fer (Fe)
dans un appareil électrique destiné à la production, la transmission et/ou la distribution d'énergie électrique.

13. Utilisation d'un adsorbeur selon la revendication 12, **caractérisé en ce que** l'adsorbeur comprend une zéolite, en particulier une zéolite contenant
- moins de 0,5 % at. de magnésium (Mg)
- moins de 0,5 % at. de calcium (Ca) et
- moins de 0,5 % at. de fer (Fe).

14. Utilisation d'un adsorbeur selon la revendication 12 ou 13, l'appareil électrique étant :
un appareillage de commutation à isolation par gaz (GIS) étant un GIS destiné à une transmission ou à une sous-transmission, ou un GIS intégré ;
une ligne isolée par gaz ;
un appareillage de commutation hybride (modules isolés par gaz) ;
un disjoncteur étant un disjoncteur à cuve sous tension, un disjoncteur à cuve hors tension, ou une unité d'interrupteur ;
un interrupteur étant un interrupteur de mise à la masse ou de mise à la terre, un commutateur d'isolement ou un sectionneur, ou un interrupteur de mise à la terre à action rapide ;
un transformateur étant un instrument ou un transformateur de mesure, un transformateur de puissance ou un transformateur de distribution ;
un parasurtenseur isolé par gaz ; ou
des extensions, des mises à niveau ou des modernisations, ou un composant ou une combinaison de celles-ci.
